# EUROPEAN PATENT SPECIFICATION

(11) **EP 1 281 641 B1**
(45) Date of publication and mention of the grant of the patent: **25.05.2005**
(21) Application number: 02077663.9
(22) Date of filing: 04.07.2002
(51) Int. Cl.: B65G 23/06, B65G 17/08

(54) **Drive system for modular link conveyor belts**
Antriebssystem für Modular-Gliederkettenförderer
Système d'entraînement pour transporteurs modulaires à maillons

(30) Priority: 03.08.2001 IT RE20000030 U
(43) Date of publication of application: 05.02.2003
(73) Proprietor: Frigor-Box S.r.l., 42019 Scandiano (Reggio Emilia) (IT)
(72) Inventor: Fantini, Contardo, 42019 Scandiano (Reggio Emilia) (IT)
(74) Representative: Corradini, Corrado

(56) References cited:
- GB-A- 1 090 630
- GB-A- 2 056 400

## Description

This invention relates to an improved drive and guide system for conveyor bands for packaged or non-packaged food or other products, a typical use of which is in cooling, deep freezing, leavening, pasteurization, drying, purification or air conditioning plants.

In such treatment plants, particularly lengthy translating bands are used, able to follow curves both within and perpendicular to the conveying plane.

A typical shape of such bands is a vertical cylindrical helix, with usually straight product arrival and departure portions, it offering high loading capacity and relatively small overall dimensions.

In particular, the overall dimension in the vertical direction can be limited by using a drive system comprising, for each individual turn of said helix, at least one motorized sprocket of vertical axis positioned to the side of the band and engaging a chain associated with the facing side of the conveyor band or belt.

A chain widely used for this purpose is one in which the links consist of rings obtained by shaping pieces of round bar and welding them, these rings then being welded to the transverse elements of the band, such as slats or rods, these latter possibly being combined with a mesh.

Another driving arrangement is described in document GB-A-2 056 400 where a belt conveyor has a closed loop forming a spiral path composed of a number of loop sections disposed one above another.

Other known chains comprise links obtained from metal plate by blanking and drawing operations, and welded to said transverse elements of the band, possibly combined with a mesh.

The chains of said known translating bands are coupled to respective profiled guide and slide bars which are carried by the longitudinal band support members, and are usually constructed of a synthetic food-quality material, such as polyethylene or polyzene. Such translating bands have proved unsatisfactory for the following reasons.

Firstly the mutual coupling or engagement between the sprocket and chain is of relatively poor precision because of said welding operations, as a result of which the chain rings undergo both dimensional and shape variations which are virtually uncontrollable and hence normally different from one ring to another.

Said coupling imprecision means that the translational movement of the band is not perfectly synchronous with the rotational movement of the sprocket, i.e. between the two there are small idle movements and hence mutual impact. Essentially, even if the conveyor speed is constant overall, it presents small discontinuities as a result of which the conveyor is subjected to vibration.

In particular, said impact generates annoying noise, causes more rapid wear, and can result in breakage or yielding by fatigue, especially if particularly high temperature gradients are present as in the case of refrigeration or deep freezing plants.

Said vibration can also be inconvenient in the presence of delicate and/or poorly stable products or containers. This vibration also generates noise which adds to the impact noise and the noise due to the sliding of the band along the profiled guide and slide bars, with obvious gradual increase in wear.

Moreover between the typically metal known chains and the respective profiled guide and slide bars, typically of food-quality plastic, there is consistent rubbing due to the weight of the band and the relative conveyed load, to the action of the sprocket on the chain, and to the possible tension of the curved band within the conveying plane.

Said rubbing between said different materials gives rise to consistent variations in the original colour of the profiled guide bars, usually blackening which deteriorates their appearance, to the annoyance of the user.

Moreover, because of the different nature of said metal and synthetic materials the mutual friction is relatively high, with consequent high power consumption.

Finally when the band is under tension during curving in the conveying plane a radial thrust is induced, directed towards the centre of the curve.

Said radial thrust generates, by friction on the guide, a parasite moment perpendicular to the conveying plane which has to be balanced together with said radial thrust.

The main object of this invention is to provide means able to overcome, or at least strongly mitigate, the aforesaid problem. Anther object of the invention is to attain said objective within the context of a simple, rational, reliable and durable construction.

Said objects are attained by a drive system according to claim 1.

All the objects of the invention are attained by virtue of the aforedefined solution.

In this respect, the combination of the said means provides a linkage of rack-and-pinion type in which the rack is flexible and always presents a curvature which is always negligible relative to the pitch circle radius of the pinion, the engagement of which is known to be delicate, precise and with extremely low friction.

Said precise engagement means that the drive member and driven member operate in synchronism, so that the band translates at virtually constant continuous speed, i.e. with the absence of variations, and hence virtually without impact, vibration and noise. This absence of vibration is particularly convenient when delicate and/or poorly stable products or containers are present.

These and further advantages, together with the constructional characteristics and merits of the proposed system and of those of a conveyor equipped with it will be apparent from the ensuing detailed description given with reference to the figures of the accompanying drawings, in which:
Figure 1 is a perspective view of a portion of a translating band provided with a drive system according to the invention.
Figure 2 shows part of the view obtained in the direction II of Figure 1, on an enlarged scale.
Figure 3 shows a detail of Figure 1, on a considerably enlarged scale.

Said figures show two longitudinal profiled support and slide members 1 for the band which in cross-section are shaped as an asymmetrical channel the longitudinal mouth of which faces outwards from the respective side of the translating band or belt. Specifically, the walls 11, 22 of said channel profile are of different width, that wall 11 of smaller width being positioned above and horizontal, whereas that wall 22 of greater width is positioned below and is downwardly inclined with its free edge connected to a vertical flange 99 for fixing to the conveyor support structure.

The provision of such longitudinal members open along their entire length and having their lower wall inclined downwards has the advantage of enabling them to be easily and completely cleaned and sanitized, and moreover they do not present closed or difficultly accessible regions where dirt could accumulate and/or cleaning/sanitizing liquids and products could stagnate.

Respective guides 2 are coupled to said upper walls 11 of said longitudinal members 1 along their entire length.

The longitudinal members 1 are preferably constructed of metal, typically stainless steel, the guides 2 being of plastic, typically polyethylene or teflon of food-quality type.

The band comprises two opposing chains, typically of metal, the links of which consist of a step-shaped plate which at one end presents a hole and at the other end a slot.

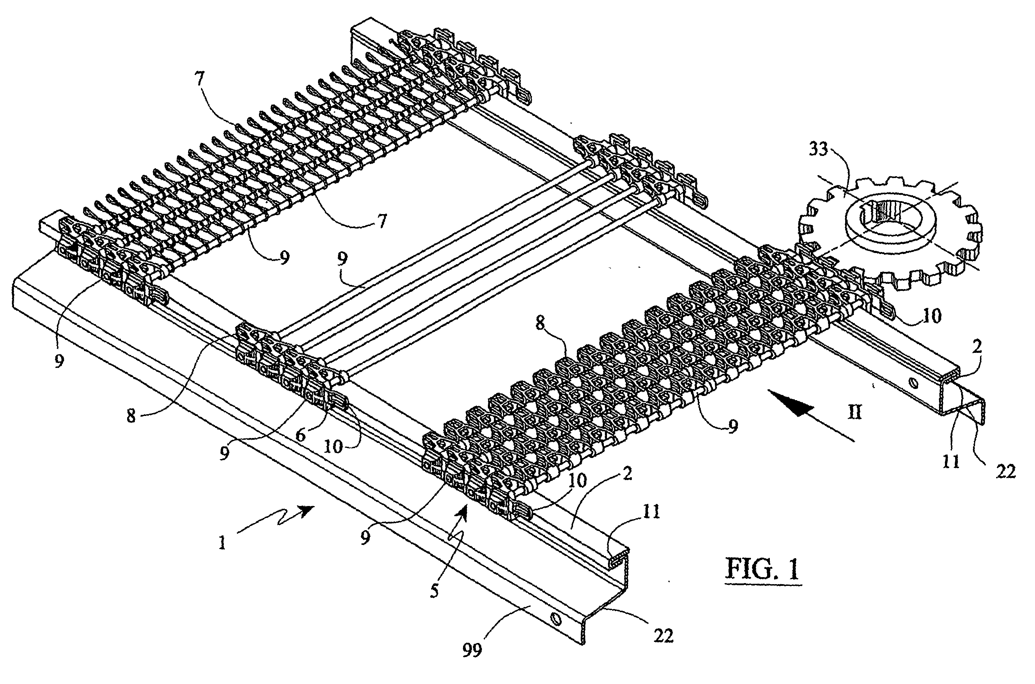

Through said apertures are inserted the opposite ends of a plurality of identical transverse metal rods 9 which, in combination with a plurality of profiled modular elements 8, form the conveying surface of the band (see Figure 1). According to the invention, the marginal edges of the band, i.e. the two opposing longitudinal strips positioned in correspondence with the guides 2, in each case consist of two alignments of modular elements 8.

According to the invention, at least said marginal modular elements 8 are formed of a synthetic material, such as acetal resin, i.e. a material having virtually the same nature as the constituent material of the guides 2.

In this manner said marginal modular elements 8 act as slide shoes for the band, such shoes providing two advantages.

The first is that the friction between the modular elements 8 and the guides 2 is much less than that present between the metal and plastic of the aforesaid known art, and normally less than one half, with evidently less power consumption.

The second derives from the fact that the almost identical nature of the constituent materials of the modular elements 8 and guides 2 prevents these latter becoming blackened.

The said marginal modular elements 8 are each provided with band retention means in the form of two right-angled descending appendices 6 the branches of which face the lower and outer faces of the respective guide 2.

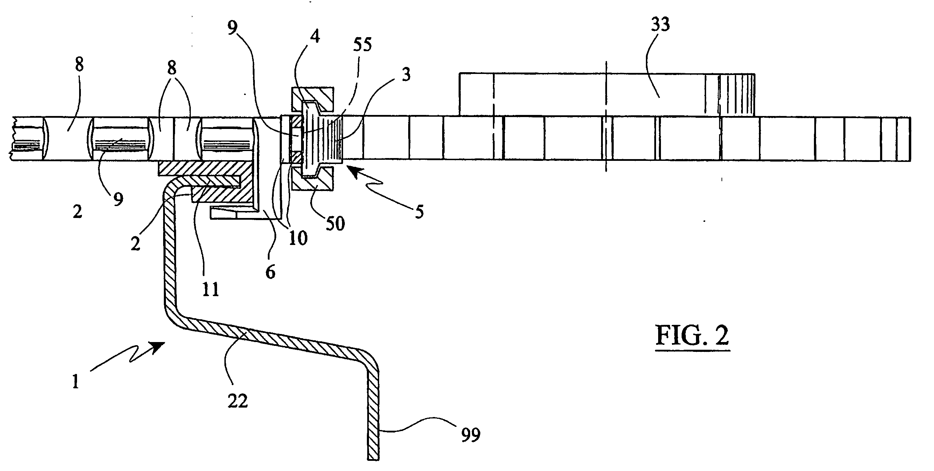

The opposite ends of the rods 9 project beyond the chains 10, where they carry, fixed thereto, respective profiled blocks 5, which can be of metal or plastic, provided with a through hole 15 (Figures 1 and 2). Said fixing can be done by any method, for example by cold forced fitting, by ribbing, by crimping the heads of the rods 9, by threaded means or by brazing.

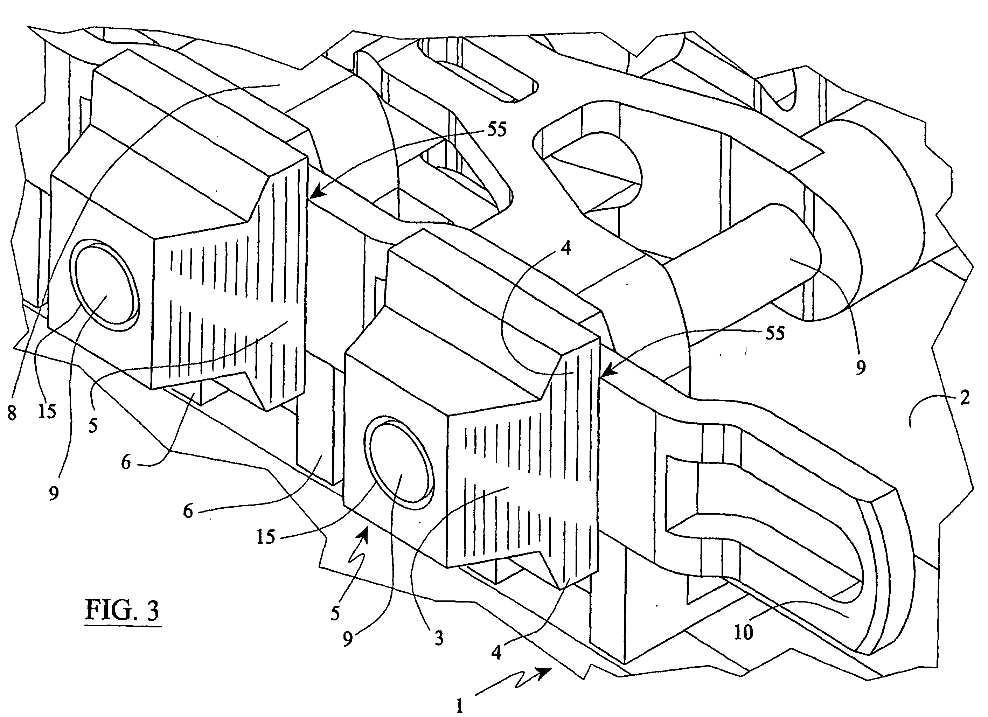

In particular, between each individual block 5 and the respective link of the chain 10, means are provided to prevent untimely rotation between the two (see Figure 3), for example these can be made integral therewith.

In the illustrated example, said antirotational means consist of a recess 55 provided on the outside of the link, and in which the base of the block 5 engages.

The said base presents, above and below, two band retention ribs 4 which engage respective guide profiles 50 (see Figure 2) carried by the conveyor structure.

Said profiles 50 cooperate with said marginal elements 8 and with said appendices 6 to counteract the forces acting on the band, of which mention has been made in the introduction.

Moreover, the outer part 3 of said block 5 is shaped as a trapezoidal tooth, i.e. a tooth of the type used on racks, its flanks also involving those portions of the block 5 lying between said two ribs 4, see Figure 3.

With said tooth 3 there engages the circular involute toothing of a motorized toothed wheel 33 of vertical axis positioned to the side of the conveyor belt or band, its pressing angle conforming to the characteristics of the conveyor.

The merits and advantages of the invention, together with its operation and use. are apparent from the aforegoing and from an examination of the accompanying figures.

It is sufficient to state that the belt can be driven by two opposing toothed wheels 33, and that the band can undergo curves both within and perpendicular to its conveying plane.

The blocks 5 are preferably removably mounted on the links of the chain 10 to enable damaged teeth 3 to be replaced.

## Claims

1. A drive system for band conveyors, the band comprising two opposing chains (10), having apertures through which are inserted the opposite ends of a plurality of identical transverse rods (9) which, in combination with a plurality of profiled modular elements (8), form the conveying surface of the band; wherein
the rods (9) have opposite ends projecting beyond the chains (10), where they carry, fixed thereto, respective profiled blocks (5),
said blocks (5) are shaped as rack - teeth (3) engaging with circular involute toothing of motorised toothed wheels (33) having vertical axes positioned to the side of the band conveyor,
two longitudinal profiled support and slide members (1 ) for the band are provided and respective guides (2) coupled to said upper walls (11) of said longitudinal members (1),
the marginal edges of the band consist of two alignments of modular elements (8) which are provided with band retention means in the form of two right-angled descending appendices (6) the branches of which face the lower and outer faces of the respective guide (2).

2. A system as claimed in claim 1 **characterised in that** said toothed wheel (33) has its axis perpendicular to the plane of the conveyor, and circular involute profiles that engage conjugate straight-flanked teeth (3) associated with the chain structure.

3. A system as claimed in claim 1, **characterised in that** said teeth are secured to the chain structure by means which are removable to facilitate their replacement as a result of wear.

4. A system as claimed in claim 1, **characterised in that** said teeth are carried by the chain structure by way of interposed means for preventing their untimely relative movement.

5. A system as claimed in claim 3, **characterised in that** said means are in the form of a prismatic coupling.

6. A system as claimed in claim 1, **characterised in that** said conjugate teeth present a trapezoidal profile when viewed in a direction perpendicular to the plane of engagement with the toothed wheel.

7. A system as claimed in claim 1, **characterised in that** said conjugate teeth are each provided, in correspondence with their base on one and the other side of the plane of engagement with the toothed wheel, with two opposing ribs perpendicular to the band.

8. A band conveyor comprising a motorized translating band the two opposing marginal longitudinal edges of which rest on full-length guide and slide profiles carried by respective longitudinal members, **characterised by** being provided with a drive system in accordance with claims from 1 to 6.

9. A conveyor as claimed in claim 7, **characterised in that** said opposing marginal longitudinal edges of said band are in the form of slide shoes constructed of a material similar to that of said guide profiles, such as to minimize the friction between them.

10. A conveyor as claimed in claim 7, **characterised in that** said longitudinal members have a cross-section in the form of an asymmetric channel, the mouth of which faces outwards from the band, their lower wall being inclined downwards.

## Patentansprüche

1. Antriebssystem für Bandförderer, wobei das Band zwei einander gegenüberliegende Ketten (10) mit Öffnungen aufweist, durch welche die einander gegenüberliegenden Enden einer Mehrzahl identischer Traversenstangen (9) eingeführt werden, die in Kombination mit einer Mehrzahl profilierter Modulbauteile (8) die Förderfläche des Bandes ausbilden, wobei
die Stangen (9) über die Ketten (10) hervorstehende, einander gegenüberliegende Enden aufweisen, an welchen sie daran befestigt jeweils Profilblöcke (5) tragen,
die Blöcke (5) in Form von Zahnradzähnen (3) ausgebildet sind, die mit einer Kreisevolventenverzahnung motorisierter Zahnräder (33) in Eingriff stehen, die in Richtung der Seite des Bandförderers positionierte Vertikalachsen aufweisen,
zwei Längsprofilträger- und Gleitbauteile (1) für das Band vorgesehen sind und jeweils Führungen (2) mit den oberen Wänden (11) der Längsbauteile (1) verbunden sind,
die Außenkanten des Bandes aus zwei Anordnungen von Modulbauteilen (8) bestehen, die mit Bandrückhalteeinrichtungen in Form von zwei rechtwinkligen abfallenden Ansätzen (6) vorgesehen sind, deren Abzweigstücke den unteren und äußeren Seiten der jeweiligen Führung (2) gegenüberliegen.

2. System nach Anspruch 1,
**dadurch gekennzeichnet, dass**
das Zahnrad (33) eine senkrecht zu der Ebene des Förderers verlaufende Achse und Kreisevolventenprofile aufweist, die mit der Kettenstruktur verbundene, gepaarte, geradflankige Zähne (3) in Eingriff nehmen.

3. System nach Anspruch 1,
**dadurch gekennzeichnet, dass**
die Zähne an der Kettenstruktur befestigt sind, durch die sie entfernbar sind, um ihren Austausch auf Grund von Verschleiß zu erleichtern.

4. System nach Anspruch 1,
**dadurch gekennzeichnet, dass**
die Zähne durch die Kettenstruktur mittels dazwischen angeordneter Einrichtungen getragen werden, um deren zeitlich unpassende relative Bewegung zu verhindern.

5. System nach Anspruch 4,
**dadurch gekennzeichnet, dass**
die Einrichtungen die Form einer prismatischen Kopplung aufweisen.

6. System nach Anspruch 1,
**dadurch gekennzeichnet, dass**
die gepaarten Zähne bei Betrachtung in einer senkrecht zu der Eingriffsebene mit dem Zahnrad verlaufenden Richtung ein trapezförmiges Profil aufweisen.

7. System nach Anspruch 1,
**dadurch gekennzeichnet, dass**
die gepaarten Zähne jeweils in Übereinstimmung mit ihrer Basis auf einer und der anderen Seite der Eingriffsebene mit dem Zahnrad mit zwei senkrecht zu dem Band verlaufenden, einander gegenüberliegenden Rippen versehen sind.

8. Bandförderer, der ein motorisiertes Translationsband aufweist, dessen zwei einander gegenüberliegende Längsaußenkanten auf in voller Länge ausgeführten Führungs- und Gleitprofilen ruhen, die jeweils von Längsbauteilen getragen werden,
**dadurch gekennzeichnet, dass**
er mit einem Antriebssystem in Übereinstimmung mit den Ansprüchen 1 bis 6 versehen ist.

9. Förderer nach Anspruch 8,
**dadurch gekennzeichnet, dass**
die einander gegenüberliegenden Längsaußenkanten des Bandes in Form von Gleitschuhen vorhanden sind, die aus einem Werkstoff konstruiert sind, der demjenigen der Führungsprofile ähnlich ist, um die Reibung zwischen denselben zu minimieren.

10. Förderer nach Anspruch 8,
**dadurch gekennzeichnet, dass**
die Längsbauteile einen Querschnitt in Form eines asymmetrischen Kanals aufweisen, dessen Öffnung von dem Band nach außen weist, wobei deren untere Wand nach unten geneigt ist.

## Revendications

1. Système à bande, la bande comprenant deux chaînes opposées (10) ayant des ouvertures par lesquelles sont insérées les extrémités opposées de plusieurs tiges transversales identiques (9) qui, en combinaison avec plusieurs éléments modulaires profilés (8), forment la surface de transport de la bande, dans lequel
les tiges (9) ont des extrémités opposées dépassant au-delà des chaînes (10) et auxquelles elles portent des blocs profilés respectifs (5) qui leur sont fixés, les blocs (5) ayant une configuration de dents de crémaillère (3) coopérant avec une denture circulaire en développante de roues dentées motorisées (33) ayant des axes verticaux et positionnées sur le côté du transporteur à bande,
deux organes profilés longitudinaux (1) de support et de glissement de la bande sont incorporés et des guides respectifs (2) sont couplés aux parois supérieures (11) des organes longitudinaux (1), et
les bords marginaux de la bande sont constitués de deux alignements d'éléments modulaires (8) qui ont des dispositifs de retenue de bande sous forme de deux accessoires (6) qui descendent à angle droit et dont les branches sont tournées vers les faces inférieure et externe du guide respectif (2).

2. Système selon la revendication 1, **caractérisé en ce que** la roue dentée (33) a son axe perpendiculaire au plan du transporteur, et des profils circulaires en développante qui coopèrent avec des dents conjuguées (3) à flanc rectiligne associées à la structure à chaîne.

3. Système selon la revendication 1, **caractérisé en ce que** les dents sont fixées à la structure à chaîne par un dispositif amovible destiné à faciliter leur remplacement en cas d'usure.

4. Système selon la revendication 1, **caractérisé en ce que** les dents sont supportées par la structure à chaîne par un dispositif interposé destiné à empêcher leur déplacement relatif non synchronisé.

5. Système selon la revendication 3, **caractérisé en ce que** le dispositif est sous forme d'un accouplement prismatique.

6. Système selon la revendication 1, **caractérisé en ce que** les dents conjuguées présentent un profil trapézoïdal lorsqu'elles sont vues en direction perpendiculaire au plan de coopération avec la roue dentée.

7. Système selon la revendication 1, **caractérisé en ce que** les dents conjuguées comportent chacune, à un emplacement correspondant à leur base sur un côté et l'autre du plan de coopération avec la roue dentée, deux nervures opposées perpendiculaires à la bande.

8. Transporteur à bande comprenant une bande motorisée se déplaçant en translation, dont les deux bords longitudinaux marginaux opposés sont en appui sur des profilés de guidage et de glissement disposés sur toute la longueur et portés par des organes longitudinaux respectifs, **caractérisé en ce qu'**il comprend un système d'entraînement selon les revendications 1 à 6.

9. Transporteur selon la revendication 7, **caractérisé en ce que** les bords longitudinaux marginaux opposés de la bande sont sous forme de patins de glissement dont la construction est en un matériau analogue à celui des profilés de guidage afin que leur frottement mutuel soit minimal.

10. Transporteur selon la revendication 7, **caractérisé en ce que** les organes longitudinaux ont une section en forme d'un canal asymétrique dont l'embouchure est tournée vers l'extérieur de la bande, leur paroi inférieure étant inclinée vers le bas.
